# EUROPÄISCHE PATENTSCHRIFT

(11) **EP 0 843 242 B1**
(45) Veröffentlichungstag und Bekanntmachung des Hinweises auf die Patenterteilung: **03.09.2003**
(21) Anmeldenummer: 97119510.2
(22) Anmeldetag: 07.11.1997
(51) Int. Cl.: G05B 19/408

(54) **Vorrichtung und Verfahren zur Steuerung einer Werkzeugmaschine**
Method and apparatus for controlling a machine tool
Méthode et appareil de commande d'une machine-outil

(30) Priorität: 13.11.1996 DE 19646772
(43) Veröffentlichungstag der Anmeldung: 20.05.1998
(73) Patentinhaber: Dr. Johannes Heidenhain GmbH, 83292 Traunreut (DE)
(72) Erfinder: Rutkowski, Christian, Dipl.-Phys., 83278 Traunstein (DE)

(56) Entgegenhaltungen:
- EP-A- 0 181 406
- EP-A- 0 414 905
- EP-A- 0 494 433
- EP-A- 0 530 384
- EP-A- 0 600 492
- DE-A- 4 026 141
- DE-A- 4 338 576
- US-A- 5 227 978
- Sautter, R.: Numerisch gesteuerte Werkzeugmaschinen, 1. Auflage, Würzburg, Vogel-Verlag, 1981, Seiten 11-20, 57-63, 69-70, 75-76

## Beschreibung

Die vorliegende Erfindung betrifft eine Vorrichtung sowie ein Verfahren zur Steuerung einer Werkzeugmaschine.

Zur Erstellung eines Teileprogrammes für numerisch gesteuerte Werkzeugmaschinen, wie sie etwa aus dem Buch "Numerisch gesteuerte Werkzeugmaschinen" von R. Sautter, 1. Auflage, Würzburg, 1981, S. 11-20 und 57-63 bekannt sind, wird seitens des Programmierers im Regelfall ein Koordinatensystem verwendet, welches auf das zu bearbeitende bzw. zu fertigende Werkstück bezogen ist. Die vom jeweiligen Werkzeug zur Werkstückbearbeitung anzufahrenden Positionen beziehen sich hingegen auf das von den an der jeweiligen Werkzeugmaschine angebrachten Meßsystemen aufgespannte Koordinatensystem. Es existieren demzufolge mehrere Koordinatensysteme, die bei der Erstellung bzw. der Abarbeitung des Teileprogrammes In Bezug zueinander zu setzen sind. Üblicherweise umfaßt jede numerisch gesteuerte Werkzeugmaschine aus diesem Grund mehrere Bezugspunkte, die mitunter auch als Nullpunkte oder Referenzpunkte bezeichnet werden. Mit deren Hilfe kann die Lage der verschiedenen Koordinatensysteme zueinander bestimmt werden, so daß bei der Teileprogrammerstellung letztlich Koordinaten im Werkstückkoordinatensystem verwendet werden können. Zur Erstellung sowie zur nachfolgenden Abarbeitung des Teileprogrammes sind daher u.a. ein oder mehrere Bezugspunkte vorzugeben, die die Lage des auf das Werkstück bezogenen Koordinatensystems in dem durch die Meßsysteme aufgespannten Koordinatensystem definieren. Zweckmäßigerweise werden hierzu im Regelfall mehrere Bezugspunkte verwendet, von denen ein Teil maschinenspezifisch definiert ist, andere hingegen beispielsweise im Einrichtbetrieb vom jeweiligen Anwender vorgegeben werden. Sowohl die Anzahl der Bezugspunkte als auch die Organisation der verschiedenen Bezugspunkte zueinander sind dabei immer abhängig vom jeweiligen Werkzeugmaschinen-Typ. Unter Organisation der verschiedenen Bezugspunkte sei dabei eine baumartige, sich verzweigende Struktur verstanden, die ausgehend von einem definierten Nullpunkt eine Reihe weiterer Bezugspunkte umfaßt, die jeweils einen eindeutigen Rückbezug auf vorhergehende Bezugspunkte und damit letztlich auf den erwähnten Nullpunkt aufweisen.
Bei bekannten numerischen Steuerungen für Werkzeugmaschinen ist nunmehr sowohl die Anzahl der Bezugspunkte als auch deren Organisation innerhalb des Steuerungsprogrammes in Form von Software-Variablen vorgegeben. In diese Software-Variablen werden die tatsächlichen Koordinaten der verschiedenen Bezugspunkte werkzeugmaschinenspezifisch eingesetzt. Ändert sich jedoch beispielsweise die Anzahl oder aber die Organisation verschiedener Bezugspunkte, wenn etwa Teileprogramme für einen anderen Werkzeugmaschinentyp mit diesem Steuerungsprogramm erstellt werden sollen, so ist auf jeden Fall auch eine Änderung respektive Umprogrammierung des eigentlichen Steuerungsprogrammes erforderlich.

Aus der DE 19516 328 A1 ist desweiteren ein numerisches Steuergerät für eine Werkzeugmaschine bekannt, bei dem Standarddaten für Werkzeuge und Bearbeitungsbedingungen in Datenbanken abgelegt werden. Hinweise bezüglich einer möglichst flexiblen Verwaltung der Bezugspunkt-Daten einer Werkzeugmaschine ergeben sich aus dieser Druckschrift jedoch nicht.

Die EP 0 181 406 A1 offenbart desweiteren ein numerisches Steuerungsverfahren für Roboter, bei dem Transformationsmatrizen zur Transformation von Werkstückkoordinaten in das Roboter-Koordinatensystem in einem separaten Speicher abgelegt werden. Details hinsichtlich der Transformationsmatrizen finden sich in diesem Dokument ebensowenig wie Hinweise darauf, wie ein möglichst flexibler Zugriff auf diese Transformationsmatrizen zu organisieren ist.

Aufgabe der vorliegenden Erfindung ist es daher, eine Vorrichtung sowie ein Verfahren zur Steuerung einer Werkzeugmaschine zu schaffen, das eine flexible Verwaltung der verschiedenen Bezugspunkte einer Werkzeugmaschine ermöglicht, die zur Erstellung und Abarbeitung von Teileprogrammen erforderlich sind. Insbesondere soll es im Fall eines Wechsels des Maschinentyps bzw. im Fall von Änderungen der Bezugspunkte und/oder deren Organisation nicht erforderlich sein, das eigentliche Steuerungsprogramm zu modifizieren.

Diese Aufgabe wird gelöst durch eine Vorrichtung mit den Merkmalen des Anspruches 1.

Vorteilhafte Maßnahmen zur Weiterbildung der erfindungsgemäßen Vorrichtung finden sich in den von Anspruch 1 abhängigen Ansprüchen.

Ein Verfahren zur Lösung der angesprochenen Problematik wird durch die Maßnahmen in Anspruch 11 angegeben.

Vorteilhafte Möglichkeiten zur Ausgestaltung des erfindungsgemäßen Verfahrens ergeben sich aus den Maßnahmen in den von Anspruch 11 abhängigen Ansprüchen.

Erfindungsgemäß ist nunmehr vorgesehen, die bezugspunkt-spezifischen Daten separat von Steuerungs- und Teileprogramm innerhalb eines Bezugspunkt-Speicherbereichs abzulegen. Auf diesen Bezugspunkt-Speicherbereich mit den maschinenspezifisch definierten bzw. definierbaren Bezugspunkten kann das Steuerungs-Programm bei der Erstellung und/oder Abarbeitung des Teileprogrammes zugreifen.
Auf diese Art und Weise lassen sich die Bezugspunkte verschiedener Werkzeugmaschinen-Typen einfach verwalten und ohne erforderliche Änderungen in den eigentlichen Steuerungsprogrammen mit den Teileprogrammen verbinden. Die Verwaltung sowohl der Bezugspunkt-Daten als auch deren Organisation erfolgt getrennt vom eigentlichen Steuerungsprogramm im dafür vorgesehenen Bezugspunkt-Speicherbereich.

Bei einer Ausführung des Bezugspunkt-Speicherbereichs in Form einer Datei ist diese vorteilhafterweise in tabellarischer Form organisiert, wobei bestimmte Teilbereiche veränderbar sind während andere Teilbereiche stets unverändert bleiben. Dies kann beispielsweise durch die geeignete Vergabe von Zugriffsberechtigungen für den Anwender sichergestellt werden. Derart kann der jeweilige Anwender eigene Bezugspunkte definieren und der Datei hinzufügen, während bestimmte maschinenspezifische Daten unverändert bleiben, d.h. einige Teilbereiche sind vom Anwender veränderbar, andere hingegen unveränderbar.
Zur Definition eigener Bezugspunkte oder zur Modifikation veränderbarer Bezugspunkte ist es desweiteren möglich, innerhalb der Bezugspunkt-Speicherbereiche Querverweise abzulegen, über die bestimmte Hilfe- und Unterstützungsfunktionen beim Einrichten von Bezugspunkten aktivierbar sind.

Weitere Vorteile sowie Einzelheiten der erfindungsgemäßen Vorrichtung sowie des erfindungsgemäßen Verfahrens ergeben sich aus der nachfolgenden Beschreibung eines Ausführungsbeispiels anhand der beiliegenden Zeichnungen.

Dabei zeigt
- Figur 1: eine mögliche Organisationsstruktur verschiedender Bezugspunkte eines Werkzeugmaschinentyps;
- Figur 2: ein schematisiertes Blockschaltbild mit Komponenten der erfindungsgemäßen Vorrichtung;
- Figur 3: den prinzipiellen Aufbau einer Ausführungsform des Bezugspunkt-Speicherbereichs.

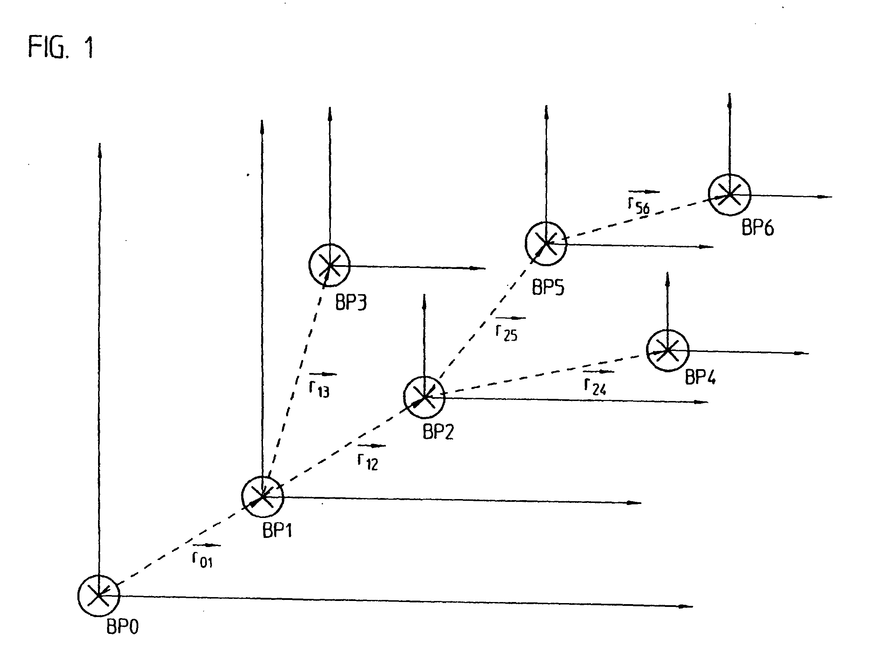

In Figur 1 ist eine mögliche Organisationsstruktur verschiedener Bezugspunkte inklusive zugehöriger Koordinatensysteme eines speziellen Werkzeugmaschinentyps in schematisierter Form teilweise dargestellt. Anhand dieses Beispieles soll nachfolgend die erfindungsgemäße Vorrichtung bzw. das erfindungsgemäße Verfahren erläutert werden.
Mit BP0 wird im dargestellten Beispiel als erster Bezugspunkt der Nullpunkt des durch die Meßsysteme aufgespannten Koordinatensystems der Werkzeugmaschine bezeichnet. Der Nullpunkt des Meßsystem-Koordinatensystems BP0 muß - wie im Beispiel gezeigt - nicht unbedingt mit dem Nullpunkt BP1 des Maschinen-Koordinatensystems, einem weiteren Bezugspunkt, zusammenfallen. Der entsprechende Nullpunkt des Maschinen-Koordinatensystems BP1 ist vielmehr in einer definierten räumlichen Orientierung gegenüber dem Nullpunkt BP0 des Meßsystem-Koordinatensystems angeordnet. Die räumliche Relativlage dieser beiden Bezugspunkte BP0 und BP1 wird durch den entsprechenden Vektor r₀₁ definiert angegeben, der dem Bezugspunkt BP1 zugeordnet ist.
Neben dem Bezugspunkt BP1, d.h. dem Nullpunkt des Maschinen-Koordinatensystems, sind in Figur 1 eine Reihe weiterer Bezugspunkte BP2 - BP6 dargestellt, die allesamt eine definierte räumliche Relativlage zueinander als auch zu BP1 bzw. BP0 aufweisen. Selbstverständlich handelt es sich bei den dargestellten Bezugspunkten lediglich um einen Teil sämtlicher, erforderlicher Bezugspunkte BP1 - BP6 des jeweiligen Werkzeugmaschinentyps, d.h. in analoger Weise können auch noch mehr Bezugspunkte derart organisiert vorhanden sein.
In Figur 1 ist aus Gründen der besseren Übersichtlichkeit dabei eine Organisation der verschiedenen Bezugspunkte BP1 -BP6 für zwei Maschinenachsen dargestellt, selbstverständlich kann im Fall einer realen Werkzeugmaschine eine derartige Organisation verschiedener Bezugspunkte allgemein in n-dimensionaler Form vorliegen, wobei n die Anzahl der Maschinenachsen angibt.

Die jeweiligen räumlichen Relativbezüge zwischen den verschiedenen Bezugspunkten BP1 - BP6 werden durch die entsprechenden Bezugsvektoren r_{NM} definiert (N, M = 0, 1,...6), über die angegeben ist, wie ein beliebiger Bezugspunkt BPM zu einem anderen Bezugspunkt BPN räumlich orientiert ist. Jeder Bezugsvektor r_{NM} wiederum ist durch seine Länge und seine räumliche Orientierung eindeutig definiert. Entscheidend hinsichtlich der Gesamt-Organisation der Bezugspunkte BP1 - BP6 ist demzufolge, daß für jeden Bezugspunkt mit Ausnahme des Bezugspunktes BP0 genau ein derartiger Bezugsvektor r_{NM} bekannt ist.
Auf diese Art und Weise läßt sich dann beispielsweise die Lage des Bezugspunktes BP6 in Bezug auf den Nullpunkt des Meßsystem-Koordinatensystems BP0 durch die vektorielle Addition der Bezugsvektoren r₀₁, r₁₂, r₂₅ und r₅₆ angeben. Analog kann auf diese Art und Weise die Lage verschiedenster Bezugspunkte BP 1 - BP6 zueinander angegeben werden, d.h. demzufolge auch die Lage verschiedener Koordinatensysteme zueinander.

Bei den Bezugspunkten BP2 - BP6 kann es sich um verschiedenste Bezugspunkte handeln, die entweder maschinenspezifisch vorgegeben sind wie beispielsweise Maschinen-Nullpunkte BP0 oder aber Maschinen-Referenzpunkte BP1, BP3, BP4, BP5. Desweiteren kann es sich hierbei um Fixpunkte der Werkzeugmaschinen-Kinematik handeln oder aber um Bezugspunkte, die die Lage von Tastsystemen, Abrichtdiamanten etc. angeben. Daneben können Bezugspunkte wie etwa BP2, BP6 vom Anwender bei der Erstellung des jeweiligen Teileprogrammes frei definiert werden. Hierbei handelt es sich etwa um Werkstück-Nullpunkte, Programm-Nullpunkte oder aber gewünschte Verfahrbereiche; zudem ist es im Regelfall möglich, sogenannte Nullpunkt-Verschiebungen durch den Anwender frei wählbar auszulegen.

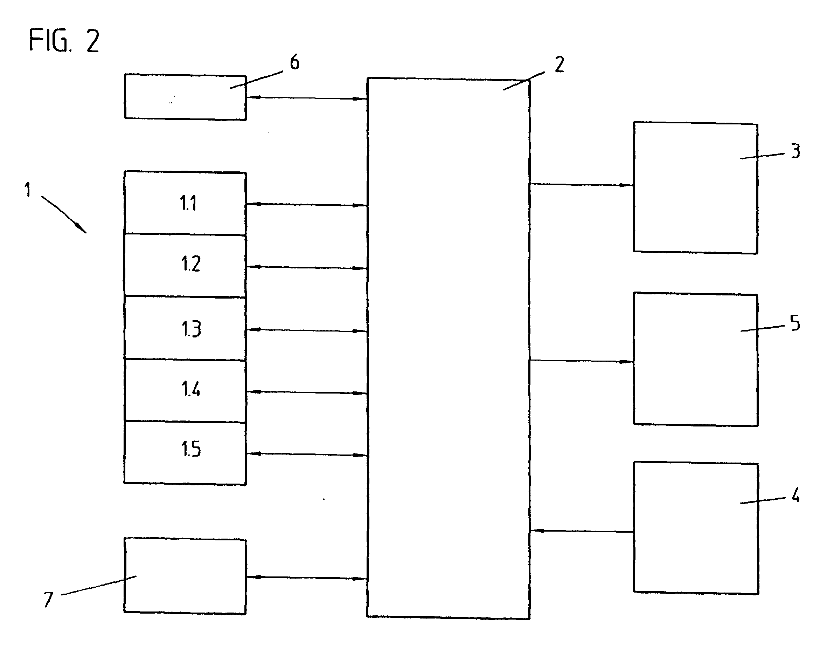

Wie bereits angedeutet soll Figur 1 lediglich ein exemplarisches Beispiel für die mögliche Organisation einer Anzahl Bezugspunkte BP1 - BP6 darstellen, die zur Erstellung eines Teileprogramms einer Werkzeugmaschine und dessen Abarbeitung erforderlich sind. Erfindungsgemäß erfolgt die Verwaltung der verschiedenen Bezugspunkte BP1 - BP6 und deren Organisation nunmehr nicht im eigentlichen Steuerungsprogramm sondern über einen davon unabhängigen, separaten Bezugspunkt-Speicherbereich. In diesem Zusammenhang sei auf die schematisierte Darstellung der Figur 2 verwiesen, anhand der im folgenden die erfindungsgemäße Vorrichtung sowie das erfindungsgemäße Verfahren erläutert wird.
In Figur 2 ist mit dem Bezugszeichen 1 der bereits erwähnte Bezugspunkt-Speicherbereich bezeichnet, der separat vom Steuerungsprogramm 2 und vom Teileprogramm 7 verwaltet wird. Mit Hilfe des über das Steuerungsprogramm 2 erstellten Teileprogrammes 7 wird eine beliebige Werkzeugmaschine 3 in bekannnter Art und Weise gesteuert, das Teileprogramm 7 demzufolge abgearbeitet. Das Teileprogramm 7 enthält die zur Werkstückbearbeitung erforderlichen Informationen. Zur Erstellung des Teileprogrammes 7 ist eine Eingabeeinheit 4 vorgesehen, die beispielsweise als bekannte Rechner-Tastatur ausgebildet sein kann. Daneben ist jedoch selbstverständlich auch die Erstellung von Teileprogrammen 7 mit Hilfe grafischer Benutzeroberflächen möglich, die geeignete Eingabemöglichkeiten aufweisen. Desweiteren umfaßt die erfindungsgemäße Vorrichtung eine Anzeigeeinheit 5, die u.a. bei der Erstellung des Teileprogrammes 7 über das Steuerungsprogramm 2 eingesetzt werden kann oder aber während der nachfolgenden Programm-Abarbeitung bestimmte Prozeß-Informationen für den Anwender visualisiert. Selbstverständlich können die Eingabe- und Anzeigeeinheit 4, 5 weitere bekannte Funktionen bei der Erstellung und Abarbeitung des jeweiligen Teileprogrammes 7 übernehmen.

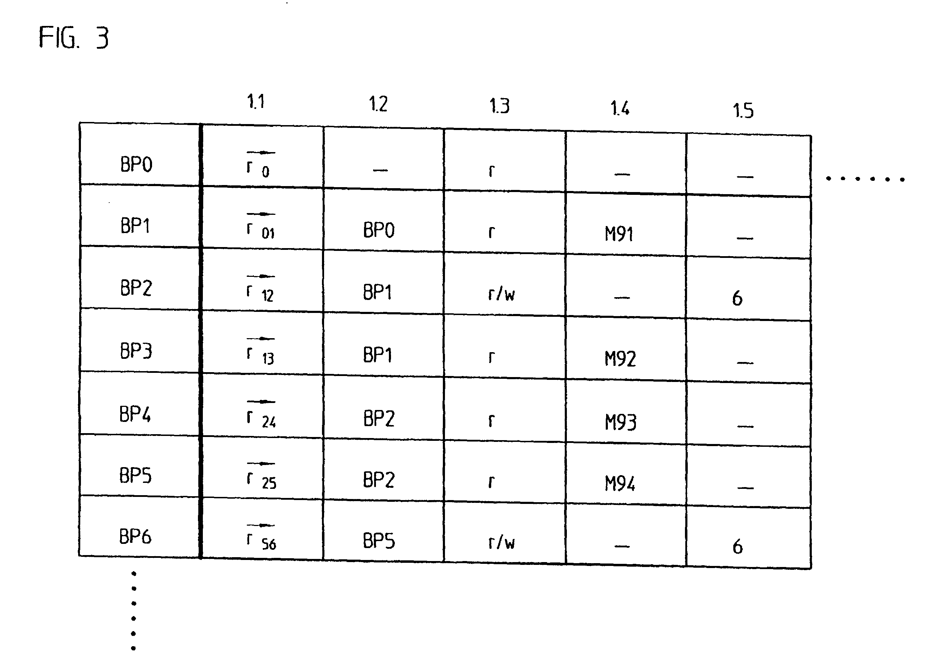

Der bereits erwähnte Bezugspunkt-Speicherbereich 1 ist in der dargestellten Ausführungsform in eine Reihe von Teilbereichen 1.1 -1.5 unterteilt, die nachfolgend weiter erläutert werden. In einer vorteilhaften Ausführungsform ist der Bezugspunkt-Speicherbereich 1 als Datei ausgebildet, die auf einem geeigneten Speichermedium gesichert wird. Auf diese Datei bzw. mindestens einige der Teilbereiche 1.1 - 1.5 kann das Steuerungsprogramm 2 sowohl während der Erstellung des Teileprogrammes 7 als auch bei der Abarbeitung des Teileprogrammes 7 zugreifen. Ein möglicher Aufbau einer entsprechenden Datei wird nachfolgend anhand des Beispiels von Figur 3 noch detailliert erläutert.
Neben der dort dargestellten Möglichkeit, die Bezugspunkt-Informationen sämtlicher Werkzeugmaschinenachsen in einer einzigen Tabelle abzulegen, existieren selbstverständlich weitere Möglichkeiten, wie der jeweilige Bezugspunkt-Speicherbereich organisiert werden kann. Beispielsweise kann auch jeder Werkzeugmaschinenachse eine separate Tabelle zugeordnet werden oder aber pro Achsgruppe eine Tabelle angelegt werden. Allen Möglichkeiten ist jedoch gemeinsam, daß eine separate und unabhängige Verwaltung der verschiedenen Bezugspunkte und deren Organisation vom Steuerungsprogramm möglich ist.

Der Bezugspunkt-Speicherbereich 1 umfaßt zumindest einen Bezugsvektor-Teilbereich 1.1 in dem die zur eindeutigen Identifizierung der Bezugsvektoren r₀₁, r₁₂, r₁₃, r₂₄, r₂₅, r₅₆ erforderlichen Daten enthalten sind. Bei diesen Daten kann es sich beispielsweise um die kartesischen Koordinaten rₓ, r_{y}, r_{z} der jeweiligen Vektorspitze handeln. Die Bezugsvektoren können jedoch auch durch andere Daten eindeutig bestimmt sein. Jedem Bezugspunkt BP1 - BP6 ist mit Ausnahme des Ursprungs-Bezugspunktes BP0 dabei genau ein bestimmter Bezugsvektor r_{NM} zugeordnet, der die räumliche Lage des jeweiligen Bezugspunktes BPN relativ zu mindestens einem anderen Bezugspunkt BPM angibt (N, M = 0, 1, 2...).

Desweiteren ist innerhalb des Bezugspunkt-Speicherbereiches 1 ein Rückbezugs-Teilbereich 1.2 vorgesehen, über den jedem Bezugspunkt BP1 - BP6 ein Bezugsparameter zugeordnet wird, der angibt auf welchen anderen Bezugspunkt BP1 - BP6 über den zugehörigen Bezugsvektor r_{NM} dieser Bezugspunkt rückbezogen ist. Hinsichtlich der möglichen Bezugsparameter existieren ebenfalls eine Reihe von Möglichkeiten; beispielsweise kann als Bezugsparameter in diesem Teilbereich 1.2 jeweils der Name oder die Bezeichnung des zugeordneten Bezugspunktes verwendet werden.

Als weiterer Teilbereich innerhalb des Bezugspunkt-Speicherbereiches 1 ist ein Zugriffsberechtigungs-Teilbereich 1.3 vorhanden, innerhalb dessen Zugriffsberechtigungen für die jeweiligen Bezugspunkte BP1 - BP6 in Form von erlaubten Lese- und/oder Schreibzugriffen eingeräumt werden. Durch die dort abgelegten Zugriffsparameter wird demzufolge angegeben, ob und/oder von wem der jeweilige Bezugspunkt veränderbar ist. Derart kann beispielsweise sichergestellt werden, daß vom jeweiligen Nutzer bestimmte maschinenspezifische Bezugspunkte nicht verändert werden können, wohingegen andere im Einrichtbetrieb definiert und/oder verändert werden können. Darüberhinaus kann im Zugriffsberechtigungs-Teilbereich 1.3 auch verwaltet werden, durch wen bestimmte Änderungen vorgenommen werden dürfen usw.

Ferner umfaßt der Bezugspunkt-Speicherbereich 1 im dargestellten Ausführungsbeispiel einen Querverweis-Teilbereich 1.5, innerhalb dessen Unterstützungsverweise abgelegt werden können. Zumindest zu den durch den Anwender veränderbaren Bezugspunkten existieren dabei definierte Unterstützungsverweise, über die dann beispielsweise zum Einrichten oder Definieren von veränderbaren Bezugspunkten maschinenspezifische Hilfefunktionen aktiviert bzw. auferufen werden können. Derartige Unterstützungsverweise können etwa in Form von Pfadangaben ausgebildet sein, über die bestimmte Hilfe-Dateien angegeben werden, die in einem separaten Hilfebereich 6 der erfindungsgemäßen Vorrichtung abgelegt und verwaltet werden. Die Hilfe-Dateien wiederum können vom jeweiligen Werkzeugmaschinen-Hersteller individuell für jeden Werkzeugmaschinentyp erstellt und verwaltet werden, so daß auf diese Art und Weise eine maschinensprezifische Unterstützungsmöglichkeit zur Verfügung steht. Inerhalb derartiger Hilfe-Dateien kann dann z.B. eine Beschreibung enthalten sein, wie ein Bezugspunkt im Einrichtbetrieb anzufahren und zu bestimmen ist. Die entsprechende Hilfe kann dabei sowohl nur einen Hlfetext umfassen als auch graphische Hilfe-Informationen anbieten etc.

Desweiteren ist im dargestelllten Ausführungsbeispiel innerhalb des Bezugspunkt-Speicherbereichs 1 ein Code-Teilbereich 1.4 für zumindest einen Teil der Bezugspunkte vorhanden. Über einen in diesem Teilbereich 1.4 abgelegten Codeparameter kann der jeweilige Bezugspunkt aus dem Teileprogramm 7 heraus bei der Abarbeitung desselben eindeutig identifiziert werden, so daß ein entsprechender Zugriff auf die jeweiligen Bezugspunktdaten möglich ist. Nicht für jeden Bezugspunkt ist hierbei ein derartiger Zugriff aus dem Teileprogramm heraus erforderlich, da auf manche Bezugspunkte entweder überhaupt nicht zugegriffen werden muß oder aber grundsätzlich eine manuelle Anwahl derartiger Bezugspunkte erfolgt. Für diese Art von Bezugspunkten ist im entsprechenden Code-Teilbereich dann kein Eintrag vorgesehen. Im Fall der Erstellung des Teileprogrammes im DIN-ISO Code können als Codeparameter für die verschiedenen Bezugspunkte beispielsweise übliche G-, M-, oder H-Codes eingesetzt werden.

Die im dargestellten Ausführungsbeispiel in Figur 2 erläuterte Unterteilung des Bezugspunkt-Speicherbereichs 1 ist selbstverständlich lediglich beispielhaft zu sehen, das heißt es ist sowohl eine Ergänzung um weitere Teilbereiche 1.1 - 1.5 als auch eine Reduzierung der verschiedenen Teilbereiche 1.1 - 1.5 möglich.

Ein Beispiel für den konkreten Aufbau eines als Datei ausgebildeten Bezugspunkt-Speicherbereiches ist in Figur 3 dargestellt. Die entsprechende Datei ist hierbei zeilenweise organisiert, das heißt jedem Bezugspunkt BP0 - BP6 wird innerhalb dieser Datei eine Zeile zugeordnet, die wiederum eine Reihe von Spalten umfaßt, die die erwähnten verschiedenen Teilbereiche 1.1 - 1.5 bilden. Alternativ zum dargestellten Ausführungsbeispiel wäre umgekehrt selbstverständlich auch eine spaltenweise Organisation der Datei möglich, d.h. jedem Bezugspunkt BP0 - BP6 ist eine bestimmte Spalte zugeordnet, während die verschiedenen Teilbereiche 1.1 - 1.5 durch die unterschiedlichen Zeilen gebildet werden.
Im Ausführungsbeispiel der Figur 3 sind für die erwähnten Teilbereiche 1.1 - 1.5 separate Spalten für die unterschiedlichen Bezugspunkte BP0 - BP6 vorgesehen, wie etwa für den Bezugsvektor-Teilbereich 1.1, den Rückbezugs-Teilbereich 1.2, den Zugriffsberechtigungs-Teilbereich 1.3, den Code-Teilbereich 1.4 sowie den Unterstützungs-Teilbereich 1.5. Daneben ist in Figur 3 angedeutet, daß sowohl die Anzahl der Zeilen als auch der Spalten ohne Probleme verändert werden kann. Es können demzufolge jederzeit noch mehr Bezugspunkte auf diese Art und Weise charakterisiert und organisiert werden. Ebenso ist es möglich, weitere relevante Bezugspunkt-Informationen in zusätzlichen Teilbereichen, respektive Spalten anzufügen.

In den verschiedenen Spalten, die etwa dem Bezugspunkt BP2 zugeordnet sind, sind die entsprechenden, vorab erläuterten Informationen abgelegt. Im Fall der Spalte für den Bezugsvektor-Teilbereich 1.1 handelt es sich um erforderliche Daten, mit denen der Bezugsvektor r₁₂ eindeutig charakterisiert wird. Der Bezugsvektor r₁₂ gibt die Lage des Bezugspunktes BP2 zum Bezugspunkt BP1 an. In der dem Rückbezugs-Teilbereich 1.2 zugeordneten Spalte ist als Rückbezugsparameter der Name des Bezugspunktes BP1 eingetragen, so daß aus den Einträgen in die beiden Spalten bzw. Teilbereiche 1.1 und 1.2 eindeutig auf die Relativlage des Bezugspunktes BP2 in Bezug auf den Bezugspunkt BP1 geschlossen werden kann. In der Spalte des Zugriffsberechtigungs-Teilbereiches 1.3 ist mit den beiden Parametern r (read) und w (write) angegeben, daß der Bezugspunkt BP2 vom jeweiligen Anwender definiert bzw. verändert werden kann. Eine entsprechende Pfadangabe für eine Hilfe-Datei in einem Hilfe-Teilbereich 6 mit Informationen zum Einrichten eines derartigen, veränderbaren Bezugspunktes ist in der Spalte 1.5 angegeben, die in Figur 2 den Unterstützungs-Teilbereich 1.5 bildet. Ferner sind in der Spalte 1.4, die den Code-Teilbereich bildet, Codeparameter angegeben, über die das Teileprogramm den Zugriff auf die jeweils erforderlichen Informationen zu den Bezugspunkten steuert. Hierbei wurden bekannte G- und M-Codes als Codeparameter für die verschiedenen Bezugspunkte verwendet.

Auf die beschriebene Art und Weise ist somit eine flexible und vom Teileprogramm bzw. Steuerungsprogramm unabhängige Organisation und Verwaltung der erforderlichen Bezugspunkte für die Steuerung einer Werkzeugmaschine möglich. Im Fall einer Änderung von Bezugspunkten muß lediglich die entsprechende Datei definiert geändert werden, das eigentliche Steuerungsprogramm bedarf keiner Änderung.
Hinsichtlich der Änderung von Daten innerhalb des Bezugspunkt-Speicherbereiches stehen eine Reihe von Möglichkeiten zur Verfügung. So ist es etwa möglich, die entsprechende Datei mit einem geeigneten Editor direkt zu bearbeiten und geänderte Daten einzugeben. Hierzu kann beispielsweise die in Figur 2 dargestellte Eingabeeinheit 4 in Verbindung mit der Anzeigeeinheit 5 eingesetzt werden.
Ferner können eventuelle Änderungen der Bezugspunkt-Daten in die Datei aufgenommen werden, indem diese Punkte mit der Werkzeugmaschine angefahren werden und beim Erreichen der jeweiligen Punkte automatisiert übernommen werden.
Eine weitere Möglichkeit zum Einrichten von Bezugspunkten besteht ebenfalls darin, gewünschte Punkte mit der Werkzeugmaschine anzufahren und an diesem Punkt die Koordinaten zu übernehmen, so daß ein automatisiertes Einrichten bzw. Setzen von Bezugspunkten resultiert.
Im Fall der beiden letztgenannten Möglichkeiten werden die zu den Bezugspunkten gehörigen Bezugs-Vektoren jeweils vom Steuerungsprogramm automatisiert berechnet und in den entsprechenden Teilbereich eingetragen.
In allen drei Varianten zur Änderung bzw. Einrichtung von Bezugspunkten dient die vorgesehene Anzeigeeinheit der erfindungsgemäßen Vorrichtung zum Visualisieren der bei der Änderung ablaufenden Prozeßschritte, so daß der jeweilige Anwender laufend über eventuelle Bezugspunkt-Änderungen informiert ist.

## Patentansprüche

1. Vorrichtung zur Steuerung einer Werkzeugmaschine, wobei die Werkzeugmaschine mehrere vorgegebene sowie vorgebbare räumliche Bezugspunkte (BP0 - BP6) aufweist, welche zur Abarbeitung und/oder Erstellung von Teileprogrammen (7) für die Werkstückbearbeitung durch ein Steuerungsprogramm (2) herangezogen werden und bezugspunkt-spezifische Daten in einem vom Steuerungsprogramm (2) und vom Teileprogramm (7) separaten und unabhängigen Bezugspunkt-Speicherbereich (1) abgelegt sind, auf den das Steuerungsprogramm (2) beim Erstellen und/oder Abarbeiten des Teileprogrammes (7) Zugriff hat, wobei im Bezugspunkt-Speicherbereich (1) zumindest für einen Teil der Bezugspunkte (BP1 - BP6) ein Code-Teilbereich (1.4) vorhanden ist, in dem ein Codeparameter (M91, M92, M93, M94) zur eindeutigen Identifikation des jeweiligen Bezugspunktes (BP1, BP3, BP4, BP5) abgelegt ist und durch dessen Verwendung im Teileprogramm (7) der jeweilige Bezugspunkt (BP1, BP3, BP4, BP5) aktivierbar ist.

2. Vorrichtung nach Anspruch 1, wobei der Bezugspunkt-Speicherbereich (1) als Datei ausgebildet ist, die zeilen- oder spaltenweise organisiert ist und in jeder Zeile oder Spalte den Bezugspunkten (BP0, BP1, BP2, BP3, BP4, BP5, BP6) zugeordnete Informationen enthalten sind.

3. Vorrichtung nach Anspruch 2, wobei der Bezugspunkt-Speicherbereich (1) soviele Zeilen oder Spalten umfaßt wie Bezugspunkte (BP0, BP1, BP2, BP3, BP4, BP5, BP6) vorhanden sind.

4. Vorrichtung nach Anspruch 1, wobei der Bezugspunkt-Speicherbereich (1) eine Reihe von Teilbereichen (1.1, 1.2, 1.3, 1.4, 1.5) aufweist, von denen einige vom Anwender nicht veränderbar sind, während andere Teilbereiche (1.1, 1.2, 1.3, 1.4, 1.5) vom Anwender veränderbar sind.

5. Vorrichtung nach Anspruch 1, wobei mindestens ein Bezugsvektor-Teilbereich (1.1) im Bezugspunkt-Speicherbereich (1) vorhanden ist, in dem den Bezugspunkten (BP0, BP1, BP2, BP3, BP4, BP5, BP6) zugeordnete Bezugs-Vektoren (r₀₁, r₁₂, r₁₃, r₂₄, r₂₅, r₅₆) abgelegt sind, die die räumliche Lage des jeweiligen Bezugspunktes (BP0, BP1, BP2, BP3, BP4, BP5, BP6) zu einem anderen Bezugspunkt (BP0, BP1, BP2, BP3, BP4, BP5, BP6) angeben.

6. Vorrichtung nach Anspruch 5, wobei mindestens ein Rückbezugs-Teilbereich (1.2) für jeden Bezugspunkt (BP0, BP1, BP2, BP3, BP4, BP5, BP6) im Bezugspunkt-Speicherbereich (1) vorhanden ist, in dem ein Bezugsparameter abgelegt ist, welcher den Bezugspunkt (BP0, BP1, BP2, BP3, BP4, BP5, BP6) charakterisiert, auf den der Bezugspunkt (BP0, BP1, BP2, BP3, BP4, BP5, BP6) über den zugeordneten Bezugsvektor (r₀₁, r₁₂, r₁₃, r₂₄, r₂₅, r₅₆) rückbezogen ist.

7. Vorrichtung nach Anspruch 1, wobei mindestens ein Zugriffsberechtigungs-Teilbereich (1.3) für jeden Bezugspunkt (BP0, BP1, BP2, BP3, BP4, BP5, BP6) im Bezugspunkt-Speicherbereich (1) vorhanden ist, in dem mindestens ein Zugriffsparameter (r, w) abgelegt ist, durch den angegeben ist, ob undloder von wem der jeweilige Bezugspunkt (BP0, BP1, BP2, BP3, BP4, BP5, BP6) veränderbar ist.

8. Vorrichtung nach Anspruch 5, wobei mindestens ein Querverweis-Teilbereich (1.5) für jeden veränderbaren Bezugspunkt (BP2, BP6) im Bezugspunkt-Speicherbereich (1) vorhanden ist, in dem ein Querverweisparameter abgelegt ist, mit dem eine Unterstützungsfunktion zur Veränderung eines Bezugspunktes (BP0, BP1, BP2, BP3, BP4, BP5, BP6) aktivierbar ist.

9. Vorrichtung nach Anspuch 8, wobei die Unterstützungsfunktion maschinenspezifisch ausgelegt ist und hierzu maschinenspezifische Daten in einem Unterstützungs-Speicherbereich (6) abgelegt sind.

10. Vorrichtung nach Anspruch 5 - 9, wobei die verschiedenen Teilbereiche (1.1, 1.2, 1.3, 1.4, 1.5) des Bezugspunkt-Speicherbereiches (1) als separate Spalten oder Zeilen ausgebildet sind.

11. Verfahren zur Steuerung einer Werkzeugmaschine, wobei die Werkzeugmaschine mehrere vorgegebene sowie vorgebbare räumliche Bezugspunkte (BP0 - BP6) aufweist, welche zur Abarbeitung und/oder Erstellung von Teileprogrammen (7) für die Werkstückbearbeitung durch ein Steuerungsprogramm (2) herangezogen werden und vom Steuerungsprogramm (2) bei der Erstellung und/oder Abarbeitung des Teileprogrammes (7) auf einen vom Steuerungsprogramm (2) und vom Teileprogramm (7) separaten und unabhängigen Bezugspunkt-Speicherbereich (1) zugegriffen wird, in dem bezugspunkt-speziflschen Daten abgelegt sind und zur eindeutigen Aktivierung des jeweils benötigten Bezugspunktes (BP1, BP3, BP4, BP5) vom Steuerungsprogramm (2) bei der Abarbeitung des Teileprogrammes (7) zumindest für einen Teil der Bezugspunkte (BP1 - BP6) auf einen Codeparameter (M91, M92, M93, M94) zugegriffen wird, der in einem Code-Teilbereich (.5) im Bezugspunkt-Speicherbereich (1) abgelegt ist.

12. Verfahren nach Anspruch 11, wobei bei der Erstellung und/oder Abarbeitung des Teileprogrammes (7) vom Steuerungsprogramm (2) auf mindestens einen Bezugsvektor-Teilbereich (1.1) im Bezugspunkt-Speicherbereich (1) zugegriffen wird, in dem die Daten mindestens eines Bezugsvektors (r₀₁, r₁₂, r₁₃, r₂₄, r₂₅, r₅₆) abgelegt sind, der die Lage dieses Bezugspunktes (BP1, BP2, BP3, BP4, BP5, BP6) zu einem anderen Bezugspunkt (BP1, BP2, BP3, BP4, BP5, BP6) angibt.

13. Verfahren nach Anspruch 11, wobei während des Einrichtens der Werkzeugmaschine (3) im Bezugspunkt-Speicherbereich (1) vorhandene Bezugspunkt-Koordinaten verändert und/oder neue hinzugefügt werden.

14. Verfahren nach Anspruch 13, wobei zum Ändern von Bezugspunkt-Koordinaten eine Unterstützungsfunktion aktiviert wird, indem über einen, dem jeweiligen Bezugspunkt (BP2, BP6) zugeordneten Querverweisparameter (6) auf die Unterstützungsfunktion zugegriffen wird.

## Claims

1. Device for controlling a machine tool, the machine tool having a plurality of prescribed and prescribable spatial reference points (BP0-BP6), which are referred to for running and/or writing part programmes (7) for workpiece machining by means of a control programme (2), and reference point-specific data being stored in a reference point storage region (1), which is separate and independent of the control programme (2) and of the part programme (7), to which reference point storage region the control programme (2) has access when writing and/or running the part programme (7), a code partial region (1.4) being present in the reference point storage region (1) at least for a part of the reference points (BP1 - BP6), in which code partial region a code parameter (M91, M92, M93, M94) for unequivocal identification of the respective reference point (BP1, BP3, BP4, BP5) is stored and, due to the use thereof in the part programme (7), the respective reference point (BP1, BP3, BP4, BP5) is activatable.

2. Device according to claim 1, the reference point storage region (1) being configured as a file, which is organised in lines or columns and information assigned in each line or column to the reference points (BP0, BP1, BP2, BP3, BP4, BP5, BP6) are contained.

3. Device according to claim 2, the reference point storage region (1) comprising the same number of lines or columns as the number of reference points (BP0, BP1, BP2, BP3, BP4, BP5, BP6) which are present.

4. Device according to claim 1, the reference point storage region (1) having a series of partial regions (1.1, 1.2, 1.3, 1.4, 1.5), some of which cannot be changed by the user, whilst other partial regions (1.1, 1.2, 1.3, 1.4, 1.5) can be changed by the user.

5. Device according to claim 1, at least one reference vector partial region (1.1) being present in the reference point storage region (1) in which reference vectors (r₀₁, r₁₂, r₁₃, r₂₄, r₂₅, r₅₆) assigned to the reference points (BP0, BP1, BP2, BP3, BP4, BP5, BP6) are stored, said reference vectors indicating the spatial position of the respective reference point (BP0, BP1, BP2, BP3, BP4, BP5, BP6) relative to another reference point (BP0, BP1, BP2, BP3, BP4, BP5, BP6).

6. Device according to claim 5, at least one back reference partial region (1.2) for each reference point (BP0, BP1, BP2, BP3, BP4, BP5, BP6) being present in the reference point storage region (1) in which a reference parameter is stored which characterises the reference point (BP0, BP1, BP2, BP3, BP4, BP5, BP6) to which the reference point (BP0, BP1, BP2, BP3, BP4, BP5, BP6) refers via the assigned reference vector (r₀₁, r₁₂, r₁₃, r₂₄, r₂₅, r₅₆)

7. Device according to claim 1, at least one access entitlement partial region (1.3) for each reference point (BP0, BP1, BP2, BP3, BP4, BP5, BP6) being present in the reference point storage region (1) in which at least one access parameter (r, w) is stored, by means of which it is indicated whether and/or by whom the respective reference point (BP0, BP1, BP2, BP3, BP4, BP5, BP6) can be changed.

8. Device according to claim 5, at least one cross-reference partial region (1.5) for each changeable reference point (BP2, BP6) being present in the reference point storage region (1) in which a cross-reference parameter is stored, with which a support function for changing a reference point (BP0, BP1, BP2, BP3, BP4, BP5, BP6) is activatable.

9. Device according to claim 8, the support function being designed to be machine-specific and machine-specific data being stored for this purpose in a support storage region (6).

10. Device according to claim 5 - 9, the various partial regions (1.1, 1.2, 1.3, 1.4, 1.5) of the reference point storage region (1) being configured as separate columns or lines.

11. Method for controlling a machine tool, the machine tool having a plurality of prescribed and prescribable spatial reference points (BP0 - BP6), which are referred to for running and/or writing part programmes (7) for workpiece machining by means of a control programme (2), and a reference point storage region (1), which is separate and independent of the control programme (2) and of the part programme (7), being accessed by the control programme (2) when writing and/or running the part programme (7), in which reference point storage region reference point-specific data are stored and a code parameter (M91, M92, M93, M94) is accessed for unequivocal activation of the respectively required reference point (BP1, BP3, BP4, BP5) by the control programme (2) when running the part programme (7) at least for a part of the reference points (BP1 - BP6), said code parameter being stored in a code partial region (1.5) in the reference point storage region (1).

12. Method according to claim 11, at least one reference vector partial region (1.1) in the reference point storage region (1) being accessed when writing and/or running the partial programme (7) by the control programme (2), in which reference point storage region the data of at least one reference vector (r₀₁, r₁₂, r₁₃, r₂₄, r₂₅, r₅₆) are stored, said reference vector indicating the position of this reference point (BP1, BP2, BP3, BP4, BP5, BP6) relative to another reference point (BP1, BP2, BP3, BP4, BP5, BP6).

13. Method according to claim 11, any reference point coordinates, which are present in the reference point storage region (1) during setting-up of the machine tool (3), being changed and/or new ones being added.

14. Method according to claim 13, a support function being activated in order to change reference point coordinates, in that the support function is accessed via a cross-reference parameter (6) which is assigned to the respective reference point (BP2, BP6).

## Revendications

1. Dispositif de commande d'une machine-outil, dans lequel la machine-outil présente plusieurs points de référence (BP0-BP6) prédéterminés et à déterminer dans l'espace, qui sont utilisés par un programme de commande (2) pour l'exécution et/ou l'établissement de programmes de pièce (7) pour l'usinage de pièces, dans lequel des données spécifiques de point de référence sont mémorisées dans une zone de mémoire de point de référence (1) indépendante, distincte du programme de pièce (7), à laquelle le programme de commande (2) peut accéder pour l'établissement et/ou l'exécution du programme de pièce (7), la zone de mémoire de point de référence (1) comportant au moins une zone partielle de code (1.4) pour au moins une partie des points de référence (BP1-BP6), dans laquelle un paramètre de code (M91, M92, M93 M94) pour l'identification précise du point de référence (BP1, BP3, BP4, BP5) concerné est mémorisé, lequel paramètre lorsqu'il est utilisé dans le programme de pièce (7) permet d'activer le point de référence (BP1, BP3, BP4, BP5) concerné.

2. Dispositif selon la revendication 1, dans lequel la zone de mémoire de point de référence (1) est agencée sous la forme de données organisées en lignes ou en colonnes, avec dans chaque ligne ou colonne, des informations associées aux points de référence (BP0. BP1, BP2. BP3, BP4, BP5. BP6).

3. Dispositif selon la revendication 2, dans lequel la zone de mémoire de point de référence (1) comporte autant de lignes ou colonnes que de points de référence (BP0. BP1, BP2. BP3, BP4, BP5. BP6).

4. Dispositif selon la revendication 1, dans lequel la zone de mémoire de point de référence (1) comporte une série de zones partielles (1.1, 1.2, 1.3, 1.4, 1.5), parmi lesquelles certaines ne peuvent pas être modifiées par l'utilisateur, tandis que d'autres zones partielles (1.1, 1.2, 1.3, 1.4, 1.5) peuvent être modifiées par l'utilisateur.

5. Dispositif selon la revendication 1, dans lequel il est prévu dans la zone de mémoire de point de référence (1) au moins une zone partielle de vecteur de référence (1.1), dans laquelle sont mémorisés des vecteurs de référence (r₀₁, r₁₂, r₁₃, r₂₄, r₂₅, r₅₆) associés aux points de référence (BP0. BP1, BP2. BP3, BP4, BP5. BP6), qui indiquent la position dans l'espace du point de référence (BP0. BP1, BP2. BP3, BP4, BP5. BP6) concerné par rapport à un autre point de référence (BP0. BP1, BP2. BP3, BP4, BP5. BP6).

6. Dispositif selon la revendication 5, dans lequel il est prévu dans la zone de mémoire de point de référence (1), pour chaque point de référence (BP0. BP1, BP2. BP3, BP4, BP5. BP6), au moins une zone partielle de rétro-référence (1.2) dans laquelle est mémorisé un paramètre de référence caractérisant le point de référence (BP0. BP1, BP2. BP3, BP4, BP5, BP6) auquel le point de référence (BP0. BP1, BP2. BP3, BP4, BP5, BP6) est rattaché par l'intermédiaire du vecteur de référence (r₀₁, r₁₂, r₁₃, r₂₄, r₂₅, r₅₆) associé.

7. Dispositif selon la revendication 1, dans lequel il est prévu dans la zone de mémoire de point de référence (1), pour chaque point de référence (BP0. BP1, BP2. BP3, BP4, BP5, BP6), au moins une zone partielle d'autorisation d'accès (1.3) dans laquelle est mémorisé un paramètre d'accès (r ,w), indiquant si et/ou par qui le point de référence (BP0. BP1, BP2. BP3, BP4, BP5, BP6) concerné peut être modifié.

8. Dispositif selon la revendication 5, dans lequel il est prévu dans la zone de mémoire de point de référence (1), pour chaque point de référence modifiable (BP2, BP6), au moins une zone partielle de translation (1.5), dans laquelle est mémorisé un paramètre de translation permettant d'activer une fonction d'assistance pour la modification d'un point de référence (BP0. BP1, BP2. BP3, BP4, BP5, BP6).

9. Dispositif selon la revendication 8, dans lequel la fonction d'assistance est développée spécifiquement pour la machine et des données spécifiques à la machine sont mémorisées à cet effet dans une zone de mémoire d'assistance (6).

10. Dispositif selon revendications 5 - 9, dans lequel les différentes zones partielles (1.1, 1.2, 1.3, 14, 1.5) de la zone de mémoire de point de référence (1) sont agencées en colonnes ou en lignes distinctes.

11. Procédé de commande d'une machine-outil, dans lequel la machine-outil présente plusieurs points de référence (BP0-BP6) prédéterminés et à déterminer dans l'espace, qui sont utilisés par un programme de commande (2) pour l'exécution et/ou l'établissement de programmes de pièce (7) pour l'usinage de pièces, et dans lequel le programme de commande (2), pour l'établissement et/ou l'exécution du programme de pièce (7), accède à une zone de mémoire de point de référence (1) indépendante, distincte du programme de pièce (7), dans laquelle sont mémorisées des données spécifiques de points de référence, et pour l'activation précise du point de référence (BP1, BP3, BP4, BP5) voulu, et le programme de commande (2), pour l'établissement et/ou l'exécution du programme de pièce (7), pour au moins une partie des points de référence (BP1 - BP6), accède à un paramètre de code (M91, M92, M93 M94) mémorisé dans une mémoire partielle de code (5) dans la zone de mémoire de point de référence (1).

12. Procédé selon la revendication 11, dans lequel le programme de commande (2), pour l'établissement et/ou l'exécution du programme de pièce (7), accède à au moins une zone partielle de vecteur (1.1) de la zone de mémoire de point de référence (1), dans laquelle sont mémorisées les données d'au moins un vecteur de référence (r₀₁, r₁₂, r₁₃, r₂₄, r₂₅, r₅₆) indiquant la position dudit point de référence ((BP0. BP1, BP2. BP3, BP4, BP5. BP6) par rapport à un autre point de référence (BP0. BP1, BP2. BP3, BP4, BP5. BP6).

13. Procédé selon la revendication 11, dans lequel pour le réglage de la machine (3), on modifie des coordonnées de point de référence présentes dans la zone de mémoire de point de référence (1) et/ou on ajoute de nouvelles coordonnées de point de référence.

14. Procédé selon la revendication 13, dans lequel pour modifier des coordonnées de point de référence, on active une fonction d'assistance en accédant à la fonction d'assistance au travers d'un paramètre de translation (6) associé au point de référence (BP2, BP6) concerné.
